# EUROPÄISCHE PATENTSCHRIFT

(11) **EP 0 524 519 B1**
(45) Veröffentlichungstag und Bekanntmachung des Hinweises auf die Patenterteilung: **03.01.1996**
(21) Anmeldenummer: 92111879.0
(22) Anmeldetag: 13.07.1992
(51) Int. Cl.: C04B 35/10

(54) **Farbiger Korund, Verfahren zu seiner Herstellung sowie dessen Verwendung**
Coloured corundum, process for its production and use thereof
Corindon coloré procédé de préparation et utilisation

(30) Priorität: 25.07.1991 DE 4124630
(43) Veröffentlichungstag der Anmeldung: 27.01.1993
(73) Patentinhaber: H.C. Starck GmbH & Co. KG, D-38642 Goslar (DE)
(72) Erfinder: Möltgen, Paul, Dr., W-7887 Laufenburg (DE); Winter, Gerhard, Prof. Dr., W-3380 Goslar (DE); Fister, Dietmar, Dr., W-7886 Murg-Niederhof (DE)
(74) Vertreter: Steiling, Lothar, Dr.

(56) Entgegenhaltungen:
- EP-A- 0 024 099
- EP-A- 0 200 487
- EP-A- 0 384 760
- GB-A- 2 099 012
- DATABASE WPIL Week 8644, Derwent Publications Ltd., London, GB; AN 86-287917
- PATENT ABSTRACTS OF JAPAN vol. 10, no. 94 (C-338)11. April 1986

## Beschreibung

Die vorliegende Erfindung betrifft einen Metalloxide enthaltenden farbigen Sinterkorund auf α-Al₂O₃-Basis, Verfahren zu seiner Herstellung sowie dessen Verwendung.

Die Herstellung abriebfester farbiger Schichten ist für die keramische Industrie, aber auch für andere Industriezweige, von großer Bedeutung.

Für Keramik oder Email häufig eingesetzte Farbkörper sind wegen ihrer Temperaturbeständigkeit Oxide, Rein-und Mischphasen mit Spinellstruktur, Rutilmischphasen, ZrO₂-Mischphasen, Zirkonsilikat-Mischphasen und andere. Diese anorganischen Farbkörper bzw. Buntpigmente sind entweder bunte Einzelverbindungen oder Wirte, in die unter Mischphasenbildung farbgebende Ionen eingebaut sind (Ullmanns Encyklopädie der technischen Chemie, 4. Auflage, Band 18, Seiten 599-628).

Der Herstellung hochabriebfester farbiger Schichten, wie sie z.B. für Bodenfliesen. Werkzeuge oder sonstige, starkem Verschleiß ausgesetzte Teile, gefordert werden, sind aufgrund der niedrigen Härte der Farbkörper Grenzen gesetzt. Die Härte der Pigmente liegen zwischen 5-8 auf der Mohs Skala.

Korund dagegen eignet sich aufgrund seiner hohen Härte (9 auf der Mohs Skala) hervorragend als Verschleißschutz. Weiterhin positiv wirkt sich die gute Temperaturbeständigkeit und chemische Resistenz des Korundes aus. Da reiner Korund jedoch farblos ist, ist er für die Herstellung von verschleißfesten Schichten, die neben der Schutzwirkung auch einen dekorativen Charakter haben sollen, ungeeignet.

Es sind zwar farbige Schmelzkorunde mit Cr₂O₃-, NiO-, CoO-, Fe₂O₃-, TiO₂- und/oder V₂O₅- oder anderen Anteilen beschrieben, der Einsatz dieser farbigen Schmelzkorunde zur Herstellung farbiger, verschleißfester Dekorschichten hat den Nachteil, daß nur ein sehr beschränktes Farbspektrum mit Farben von geringer Intensität zur Verfügung steht. Ein weiterer Nachteil ist das ungünstige Lichtbrechungsverhalten des Schmelzkorundes, wodurch fein gemahlener Korund sehr hell, nahezu farblos, erscheint.

So sind aus den EP-A-0 200 487, GB-A-2 099 012 sowie EP-A-0 024 099 Verfahren zur Herstellung von Sinterkorund über das Sol-Gel-Verfahren bekannt, wobei Vorläufer von Metalloxiden oder Spinellen zugegeben werden, die unter den Verfahrensbedingungen die entsprechenden Metalloxide bilden.

Weiterhin werden in DATABASE WPIL/DERWENT AN 86-287917 und JP-A-61209995 (18.9.86) die Herstellung von α-Al₂O₃ über das Sol-Gel-Verfahren beschrieben. Das so erhaltene Pulver wird mit farbgebenden Oxiden gemischt, verpreßt und anschließend gesintert oder geschmolzen. Das hiernach erhaltene Produkt ist ein monokristalliner, gefärbter Al₂O₃-Körper, der als Schmuckstein geeignet ist.

Außerdem sind viele der wenigen in der Korundschmelze aufgrund ihrer Beständigkeit überhaupt einsetzbaren Oxide toxisch, wodurch die Verarbeitung im offenen Lichtbogenofen äußerst problematisch ist.

Für Dekorzwecke sind die meisten der bekannten farbigen Schmelzkorunde nicht geeignet.

Schichten, in denen weißer Korund zusammen mit Farbkörpern verarbeitet wurde, zeigen den Nachteil, daß homogene Schichten nur mit sehr hohem Aufwand erreicht werden konnten.

Darüber hinaus unterliegt der neben dem Korund vorhandenen Farbkörper bei der angestrebten starken Beanspruchung einem deutlich höheren Verschleiß im Vergleich zum Korund und wird aus der Schicht herausgelöst. Dadurch kommt es zunächst zu einer Schwächung der Farbintensität. Außerdem können sich in den entstehenden Löchern Fremdpartikel wie Schmutz einlagern, was zu einer Verwischung der ursprünglichen Farbe in den Graubereich führt.

Insgesamt leidet die Abriebfestigkeit und der Verschleißschutz ist nur mangelhaft.

Aufgabe dieser Erfindung ist die Bereitstellung eines farbigen Korundes, der die oben beschriebenen Nachteile nicht aufweist.

Überraschenderweise wurde nun gefunden, daß die gestellten Anforderungen in hervorragender Weise erfüllt werden durch einen farbgebenden Metalloxide enthaltenden Sinterkorund. Gegenstand dieser Erfindung ist somit Metalloxide enthaltender farbiger Sinterkorund auf α-Al₂O₃-Basis, dadurch erhältlich, daß die Herstellung des Al₂O₃ über das Sol-Gel-Verfahren erfolgt und Metalloxide in Form von anorganischen Farbkörpern und/oder Buntpigmenten in einer Menge von 0,1 bis 30 Gew.-%, gerechnet als Metallion, zugesetzt werden, wobei der Sinterkorund eine Primärkristallitgröße von 0,1 bis 3 µm aufweist.

Sinterkorunde und Verfahren zu ihrer Herstellung werden in zahlreichen Patentpublikationen beschrieben, beispielsweise in den US-Patentschriften US-A 3 454 385, US-A 3 909 991, US-A 2 618 567 und US-A 3 108 888.

Für den Einsatz in Schleifmitteln wurden in neuerer Zeit Sinterkorunde auf α-Al₂O₃-Basis bekannt, deren mikrokristalline Struktur besondere schleiftechnische Vorteile mit sich bringt.

So wird in der US-A 4 314 827 ein mikrokristalliner Sinterkorund beschrieben, der über die Sol-Gel-Technik bei Sintertemperaturen von ca. 1400°C hergestellt wird. Als Sinterhilfe wird eine modifizierte Komponente wie HfO₂, ZrO₂, MgO, ZnO, CoO, NiO u.a. zugesetzt.

Aus der EP-A 394 501 ist ein ökonomisches Verfahren zur Herstellung von Sinterkorund ausgehend vom chi-Al₂O₃ bekannt.

In der EP-A 152 768 wird ein Schleifmaterial offenbart, welches ebenfalls durch Sintern eines Aluminiumoxidhydratgels hergestellt wird. Als Keimbildner werden hier zur Herabsetzung der Umwandlungstemperatur von γ-Al₂O₃ in α-Al₂O₃ feinste α-Al₂O₃-Teilchen zugesetzt. Weitere Zusätze von Kristallwachstumshemmer wie MgO, SiO₂, Cr₂O₃, Fe₂O₃, ZrO₂ können ebenfalls verwendet werden.

In einer bevorzugten Ausführungsform wurde beim erfindungsgemäßen farbigen Korund die α-Al₂O₃-Phase über das Sol-Gel-Verfahren erhalten. Bei Sintertemperaturen zwischen 1200 und 1400°C gelingt es, eine dichte und extrem harte Submicron-α-Al₂O₃-Matrix zu erhalten, in die homogen verteilt die Farbkörper eingebaut sind. Bevorzugt weist der Sinterkorund eine Primärkorngröße von 0,1 bis 3 µm, bevorzugt 0,1 bis 1 µm, auf.

Die Farbigkeit der erfindungsgemäßen Korunde wird durch den Einbau der erfindungsgemäßen farbgebenden Metalloxide in die Sinterkorundmatrix erreicht. Hierfür sind alle entsprechende farbgebenden Oxide geeignet, wie z.B. Oxide des Chroms, Vanadiums, Eisens, Nickels, Cobalts, usw..

Gegenstand dieser Erfindung ist auch ein Verfahren zur Herstellung des erfindungsgemäßen farbigen Korunds. Dieses ist dadurch gekennzeichnet, daß während der Herstellung von α-Al₂O₃ über das Sol-Gel-Verfahren anorganische Festkörper und/oder Buntpigmente zugesetzt werden.

Die farbgebende Komponente wird dabei während des Sol- oder Gel-Zustandes entweder als feines Pulver oder als kolloidale Lösung zugegeben.

Die so hergestellten Korundfarbkörper zeichnen sich durch eine außerordentlich homogene Verteilung der farbgebenden Pigmente in der Korundmatrix aus. Die Matrix selber ist farbneutral, nahezu transparent und beeinträchtigt die ursprüngliche Farbintensität des Pigmentes überraschend wenig. Schon mit geringen Mengen an zugesetztem Farbpigment gelingt es, intensiv gefärbte Korunde herzustellen, deren Farbintensität auch im Feinkornbereich Bestand hat.

Die niedrigen Sintertemperaturen erlauben es, nahezu alle bekannten oxidischen Farbkörper einzulagern. Überraschend ist sogar festzustellen, daß eine Stabilisierung temperaturempfindlicher Farbkörper, wie z.B. Rutilfarbkörper, in der Matrix stattfindet.

Die erfindungsgemäßen Farbkorunde haben somit den zusätzlichen Vorteil, auch für Anwendungen in Bereichen interessant zu werden, in denen es nicht so sehr auf die Härte, sondern auf die Beständigkeit des Farbkörpers ankommt.

Beim Einsatz einiger Metalloxide, wie z.B. dem Cr₂O₃, ist zu beobachten, daß Reaktionen mit der Matrix stattfinden. Es kommt zu Einlagerungen im Al₂O₃-Gitter, wodurch die ursprüngliche Farbe des Farbkörpers verloren geht und neue Farben entstehen. Dabei ist die Farbintensität der so erhaltenen Farbkorunde sehr gut.

Das erfindungsgemäße Verfahren zur Herstellung farbiger Korunde hat somit den zusätzlichen Vorteil, hervorragend für die Herstellung neuer Farbkörper geeignet zu sein. Durch den kombinierten Einsatz verschiedener Buntpigmente oder Metalloxide sind weitere Farbkreationen möglich.

Verbessert werden kann die Qualität der Farbkorunde (Härte, mikrokristalliner Aufbau) außerdem durch den zusätzlichen Einsatz von Sinterhilfen und/oder Kristallisationskeimen. Dadurch gelingt es, eine mikrokristalline Matrix in einem Bereich mit einer Primärkristallitgröße der Al₂O₃-Kristallite unter 0,5 micron zu erhalten. Diese Submicron-α-Al₂O₃-Matrix zeichnet sich durch besondere Härte und Zähigkeit aus und ermöglicht eine noch homogenere Verteilung der Farbkörper.

In Abhängigkeit vom beabsichtigten Verwendungszweck für die Korundfarbkörper kann der Anteil an farbgebenden Metalloxiden bezogen auf die Al₂O₃-Matrix frei variiert werden.

Für Anwendungsbereiche, bei denen es vor allem auf die Härte des Korundes in Kombination mit der Farbe ankommt, ist es sinnvoll, Farbpigmente in einem Bereich zwischen 0,1 bis 15 Gew.-%, bevorzugt 1 bis 10 Gew.-%, bezogen auf die Al₂O₃-Matrix, einzusetzen.

Bei höheren Anteilen an farbgebenden Komponenten in der Matrix geht die ursprüngliche Härte der Matrix sukzessive verloren. Tiefere Anteile als 0,1 Gew.-% erscheinen aufgrund der geringen Farbintensität des so gebildeten Farbkorundes nicht sinnvoll.

Wenn die farbstabilisierende Wirkung der Matrix für bestimmte empfindliche Farbkörper gewünscht ist, ist es sinnvoll, Farbpigmente im Bereich zwischen 0,1 bis 30 Gew.-%, bezogen auf die Al₂O₃-Matrix, einzusetzen.

Farbkorunde mit höheren Anteilen haben für den obengenannten Anwendungszweck den Nachteil, daß die stabilisierende Wirkung mit steigender Konzentration des Farbpigmentes in der Matrix nachläßt, während die Farbintensität schon bei relativ geringen Konzentrationen sehr gut ist und mit steigender Konzentration nur unwesentlich verbessert wird.

Wird das erfindungsgemäße Verfahren zur Herstellung neuer Farbkörper genutzt, sind auch höhere Anteile an Fremdoxid in der Al₂O₃-Matrix sinnvoll.

Gegenstand dieser Erfindung ist somit auch die Verwendung des erfindungsgemäßen Korundes zur Herstellung von verschleißfesten farbigen keramischen Schichten, Dabei können die erfindungsgemäßen farbigen Korunde durch Plasmaspritzen auf ein Substrat aufgebracht werden. Hierbei sollte die Korngröße des Korunds kleiner als 50 µm betragen. Als relativ grobes Korn (50 bis 250 µm) kann der erfindungsgemäße farbige Korund bevorzugt als Verschleißschutz in Bodenfliesen eingesetzt werden. Bevorzugt ist auch die Verwendung des erfindungsgemäßen farbigen Korundes als Farbkörper. Dieser eignet sich insbesondere für die Einfärbung von keramischen Materialien, wie z.B. als Farbkörper in Glasuren. Der erfindungsgemäße Farbkörper ist aber auch hervorragend geeignet für die Einfärbung organischer Systeme, wie Kunststoffe und Lacke.

Im folgenden wird die Erfindung beispielhaft erläutert, ohne daß darin eine Einschränkung zu sehen ist.

### Beispiel 1

500 g Aluminiumoxidmonohydrat (Disperal der Fa. Condea) wurden in 2 l Wasser unter Zusatz von Säure (HNO₃) dispergiert. Die Suspension wurde unter ständigem Rühren erwärmt und bei gleichzeitigem Zutropfen von 10 ml Salpetersäure mit 18,75 g eine Zirkon-Vanadin-Blau-Farbkörpers (V-haltiger ZrSiO₄) versetzt. Schon beim Erwärmen zeigte sich eine deutliche Zunahme der Viskosität des Sols. Einige Minuten nach vollständiger Zugabe des Farbkörpers war der Gelierungsprozeß abgeschlossen. Das Gel wurde bei 70°C im Trockenschrank getrocknet. Das getrocknete Gel wurde bei 500°C kalziniert und anschließend 4 Stunden bei 1350°C gesintert.

Der Farbkorund kann vor oder nach dem Sintern auf die gewünschte Korngröße zerkleinert werden.

| Analyse | | | |
|---|---|---|---|
| Pigment-Anteil (Gew.-%) | Härte (GPa) (HV 0,2) | Dichte | Farbe |
| 5 % | 18,3 | 97,5 % | Co-blau |

Die Farbintensität des Korundfarbkörpers war vergleichbar der des eingesetzten Farbpigments. Der Korundfarbkörper wurde auf das Kornband -250/+50 micron zerkleinert und für die Beschichtung abriebfester Bodenfliesen eingesetzt.

### Beispiel 2

Die Präparation erfolgte wie in Beispiel 1.

An Stelle des Zirkon-Vanadin-Blau-Farbkörper wurde ein blaugrüner CoCr-Spinell eingesetzt.

| Analyse | | | |
|---|---|---|---|
| Pigmentanteil (Gew.-%) | Härte (GPa) (HV 0,2) | Dichte | Farbe |
| 5 % | 19,7 | 96,5 % | Dunkelblau |

Die ursprüngliche Farbe des Pigmentes veränderte sich beim Herstellprozeß von türkis nach dunkelblau.

### Beispiel 3

Die Präparation erfolgte wie in Beispiel 1.

Als Buntpigment wurde der ein Pink-farbener Sphen-Farbkörper (CrIII)-CaSn-Silikat) eingesetzt.

| Analyse | | | |
|---|---|---|---|
| Pigmentanteil (Gew.-%) | Härte (GPa) (HV 0,2) | Dichte | Farbe |
| 5 % | 16,4 | 95,8 % | pink |

Die Intensität der Farbe nimmt im Vergleich zum reinen Buntpigment während des Fertigungsprozesses etwas ab.

Das reine Pigment ist thermisch nicht sehr stabil. In Kombination mit Korund besteht die Möglichkeit den Farbkörper problemlos auch für keramische Zwecke einzusetzen. Der Farbkörper wurde auf kleiner 50 micron zerkleinert und in Glasuren verarbeitet.

### Beisiel 4

Präparation siehe Beispiel 1.

Als farbgebende Komponente wurde Chromoxid GN (Handelsprodukt der Bayer AG) eingesetzt.

| Analyse | | | |
|---|---|---|---|
| Pigmentanteil | Härte (GPa) (HV 0,2) | Dichte | Farbe |
| 20 % (Cr₂O₃) | 16,3 | 98,9 % | pink |

Das ursprünglich grüne Cr₂O₃ wird im Al₂O₃-Gitter eingebaut und es entsteht ein intensiv pink gefärbter, sehr stabiler Farbkörper.

## Patentansprüche

1. Metalloxide enthaltender farbiger Sinterkorund auf α-Al₂O₃-Basis, dadurch erhältlich, daß die Herstellung des Al₂O₃ über das Sol-Gel-Verfahren erfolgt und Metalloxide in Form von anorganischen Farbkörpern und/oder Buntpigmenten in einer Menge von 0,1 bis 30 Gew.-%, gerechnet als Metallion, zugesetzt werden, wobei der Sinterkorund eine Primärkristallitgröße von 0,1 bis 3 µm aufweist.

2. Farbiger Korund gemäß Anspruch 1, dadurch gekennzeichnet, daß die Primärkristallitgröße 0,1 bis 1 µm beträgt.

3. Verfahren zur Herstellung von farbigem Korund gemäß einem der Ansprüche 1 oder 2, dadurch gekennzeichnet, daß während der Herstellung von α-Al₂O₃ über das Sol-Gel-Verfahren anorganische Farbkörper und/oder Buntpigmente zugesetzt werden.

4. Verwendung des farbigen Korunds gemäß einem oder mehreren der Ansprüche 1 bis 3 zur Herstellung von verschleißfesten farbigen keramischen Schichten.

5. Verwendung des farbigen Korunds gemäß einem oder mehreren der Ansprüche 1 bis 3 als Farbkörper.

## Claims

1. An α-Al₂O₃-based coloured sintered corundum containing metal oxides obtainable by producing the Al₂O₃ by the sol-gel process and adding metal oxides in the form of inorganic pigments and/or coloured pigments in a quantity of 0.1 to 30% by weight, expressed as metal ion, the sintered corundum having a primary crystallite size of 0.1 to 3 µm.

2. A coloured corundum as claimed in claim 1, characterized in that the primary crystallite size is 0.1 to 1 µm.

3. A process for the production of the coloured corundum claimed in claim 1 or 2, characterized in that inorganic pigments and/or coloured pigments are added during the production of Al₂O₃ by the sol-gel process.

4. The use of the coloured corundum according to one or more of claims 1 to 3 for the production of wear-resistant coloured ceramic layers.

5. The use of the coloured corundum according to one or more of claims 1 to 3 as a pigment.

## Revendications

1. Corindon fritté, à base d'α-Al₂O₃, coloré par des oxydes métalliques, qu'on obtient en préparant l'Al₂O₃ par le procédé sol-gel et en ajoutant les oxydes métalliques à l'état de corps colorants et/ou de pigments colorés minéraux en quantités de 0,1 à 30 %, exprimé en ions métalliques, le corindon fritté ayant une dimension de cristallite primaire de 0,1 à 3 µm.

2. Corindon coloré selon la revendication 1, caractérisé en ce que la dimension de cristallite primaire est de 0,1 à 1 µm.

3. Procédé de préparation du corindon coloré selon une des revendications 1 ou 2, caractérisé en ce que, au cours de la préparation de l'α-Al₂O₃ par le procédé sol-gel, on ajoute des corps colorants et/ou pigments colorés minéraux.

4. Utilisation du corindon coloré selon une ou plusieurs des revendications 1 à 3 pour l'application de couches céramiques colorées résistant à l'usure.

5. Utilisation du corindon coloré selon une ou plusieurs des revendications 1 à 3 en tant que corps colorant.
